# EUROPEAN PATENT APPLICATION

(11) **EP 1 840 404 A1**
(43) Date of publication of application: **03.10.2007**
(21) Application number: 07006257.5
(22) Date of filing: 27.03.2007
(51) Int. Cl.: F16D 65/14

(54) **Wedge roller ramp parking brake assembly**

(30) Priority: 28.03.2006 US 390628
(71) Applicant: Akebono Corporation (North America), Elizabethtown KY 42701 (US)
(72) Inventor: Barbosa, Manuel, Novi, Michigan 48375 (US); Narayanan, Lakshmi, Farmington Hills Michigan 48336 (US)
(74) Representative: Bawden, Peter Charles

(57) **Abstract**

A parking brake assembly (10) includes a brake mechanism (1), a coupling mechanism (2) and an apply mechanism (3). The brake mechanism includes a piston (18) that clamps brake pads against a rotor. The coupling mechanism couples the apply mechanism to the brake mechanism. The coupling mechanism includes a first member (42) having a first end (54) and a second end (58). The first end is configured to engage the piston. The second end includes a pocket (60). The coupling mechanism includes a second member (44) having a first end (62) and a second end (64). The first end of the second member defines a roller surface (66). The roller surface has a ramp portion. The coupling mechanism includes a rolling member (46) held by the pocket and disposed between the pocket and the roller surface. The rolling member travels along the roller surface when the first member moves a first distance increment along a first axis (50) and the second member moves a second distance increment along a second axis (52). The first and second axes are not collinear and a ratio based on the first distance increment and the second distance increment varies based on a position of the rolling member along the roller surface.

## Description

### FIELD

The present invention relates to a brake assembly and more particularly relates to a variable ratio coupling mechanism that may be engaged by an apply mechanism at a plurality of orientations to engage a brake mechanism.

### BACKGROUND

Typically, a brake assembly includes a parking brake assembly that can engage a brake mechanism when a parking lever, pedal, etc. is engaged. The brake mechanism extends a piston against brake pads to clamp the brake pads against a rotor. With the parking brake engaged, a vehicle may park on a hill, etc. Two typical parking brake assembly designs include what may be commonly referred to as a cam-strut mechanism and a ball-ramp mechanism.

Briefly, a ball ramp mechanism includes, for example, a ball that is disposed between two plates. A ramp is formed on the first plate and a pocket that holds the ball is formed on the second plate. As the ball travels up the ramp due to the relative motion between the two plates, the plates move away from each other. In this regard, a portion of the ball-ramp mechanism extends to engage the brake mechanism.

The cam-strut mechanism includes a strut that extends to engage the brake mechanism and a cam that engages an opposite end of the strut. Movement of the cam urges the strut toward the piston to engage the brake mechanism. Specifically, the cam may be configured to cup the end of the strut. When the cam is moved relative to the strut, the strut travels up a wall of the cam to urge the strut toward the piston and engage the brake mechanism.

In some instances, the ball-ramp mechanism may be more efficient than the cam-strut mechanism. For example, while exerting a clamping force, there tends to be less friction when rolling a ball up a ramp (in the ball-ramp mechanism) than sliding a strut within a pocket of the cam (in the cam-strut mechanism). The ball-ramp mechanism may also include a varying mechanical ratio. For example, an initial low mechanical ratio permits a fast take-up to quickly remove clearance between the brake pads and the rotor. A subsequent high ratio can provide more clamping force for less travel of the brake cable relative to the initial low mechanical ratio. In this regard, the parking brake lever initially travels quickly, when the clamp force is lower. The parking brake lever then travels relatively less quickly with the higher mechanical ratio, when the clamp force is higher.

Notwithstanding efficiency, the cam-strut mechanism may be oriented at almost any direction that allows for connection of the brake cable and travel of the strut and an engaging member. In contrast, the ball-ramp mechanism must be rotated (i.e., rotation that causes it to extend) on the same axis on which the mechanism extends, thus limiting orientation of the engaging member and routing paths of the brake cable.

The cam-strut mechanism is typically configured so that the cam and the strut are outside of the caliper body and thus not within the hydraulic fluid chamber. In contrast, the ball-ramp mechanism is configured so that the ball-ramp mechanism is inside the caliper body and inside the hydraulic chamber. Additional mechanisms inside the fluid chamber may increase the propensity for air entrapment within the fluid chamber and may make it more difficult to bleed air from the fluid chamber.

### SUMMARY

The present teachings generally include a parking brake assembly that includes a brake mechanism, a coupling mechanism and an apply mechanism. The brake mechanism includes a piston that clamps brake pads against a rotor. The coupling mechanism couples the apply mechanism to the brake mechanism. The coupling mechanism includes a first member having a first end and a second end. The first end is configured to engage the piston. The second end includes a pocket. The coupling mechanism includes a second member having a first end and a second end. The first end of the second member defines a roller surface. The roller surface has a ramp portion. The coupling mechanism includes a rolling member held by the pocket and disposed between the pocket and the roller surface. The rolling member travels along the roller surface when the first member moves a first distance increment along a first axis and the second member moves a second distance increment along a second axis. The first and second axes are not collinear and a ratio based on the first distance increment and the second distance increment varies based on a position of the rolling member along the roller surface.

Further areas of applicability of the present teachings will become apparent from the detailed description provided hereinafter. It should be understood that the detailed description and specific examples, while indicating various embodiments of the present teachings, are intended for purposes of illustration only and are not intended to limit the scope of the teachings.

### BRIEF DESCRIPTION OF THE DRAWINGS

The present teachings will become more fully understood from the detailed description, the appended claims and the accompanying drawings, wherein:

Figure 1 is a schematic view of a parking brake assembly including an apply mechanism that engages a brake mechanism via a coupling mechanism in accordance with the present teachings;

Figure 2 is a perspective view of a brake assembly having the parking brake assembly connected to a caliper body in accordance with the present teachings;

Figure 3 is similar to Figure 2 and shows a face of a piston and a brake pad (in phantom);

Figure 4 is an exploded assembly view of the parking brake assembly of Figure 2 showing a lever connected to a wedge member that is connected to a post member via a rolling member;

Figure 5 is a cross-sectional view of the brake assembly of Figure 2;

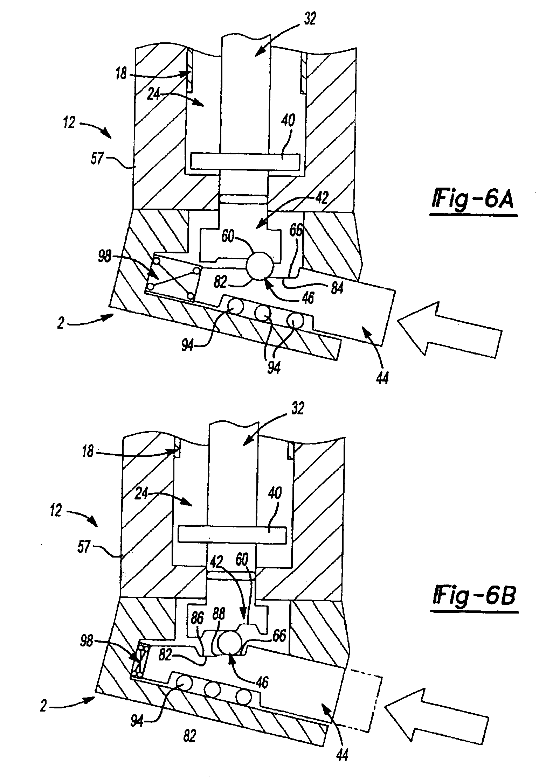

Figure 6A is an exemplary diagram of a wedge member and a post member in a retracted position in accordance with the present teachings;

Figure 6B is similar to Figure 6A and shows the post member in an extended position that may engage the brake mechanism;

Figure 7 is a diagram that shows a general relationship between travel of the post member and travel of the wedge member in accordance with the present teachings;

Figure 8 is a diagram that shows a general relationship between a clamping force generated by the brake mechanism of the brake assembly and a force exerted on the parking brake cable in accordance with the present teachings;

Figure 9 is a diagram that shows a general relationship between the clamping force generated by the brake mechanism and travel of the parking brake cable in accordance with the present teachings; and

Figures 10, 11 and 12 are diagrams of alternative embodiments showing various apply mechanism configurations that permit the parking brake mechanism to be engaged at a plurality of orientations.

### DETAILED DESCRIPTION

The following description of the various embodiments is merely exemplary in nature and is in no way intended to limit the teachings, their application, or uses.

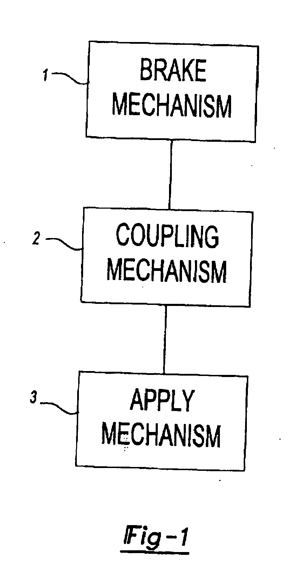

With reference to Figure 1, the present teachings generally include a brake mechanism 1, a coupling mechanism 2 and an apply mechanism 3. The brake mechanism 1 may be a portion of various suitable brake assemblies such as a disc brake caliper (provided in further detail below) or any other brake assembly such as a drum brake, air brake or combinations thereof. The apply mechanism 3 may be various suitable mechanisms that may include, for example, a parking brake cable that is connected to a parking brake lever or a parking brake pedal and routed through the vehicle in a suitable manner. The apply mechanism 3 may be coupled to the brake mechanism 1 via the coupling mechanism 2 to form an exemplary parking brake assembly.

In accordance with the present teachings, the coupling mechanism 2 may provide a variable mechanical ratio between the apply mechanism 3 and the brake mechanism 1. In addition, the coupling mechanism 2 may permit the apply mechanism 3 to be coupled to the brake mechanism 1 so that the coupling mechanism 2 may be engaged (to engage the brake mechanism 1) at a plurality of orientations by the apply mechanism 3. It will be appreciated that portions of the brake mechanism 1, the coupling mechanism 2, the apply mechanism 3 and/or combinations thereof may be integral to one another or separate components.

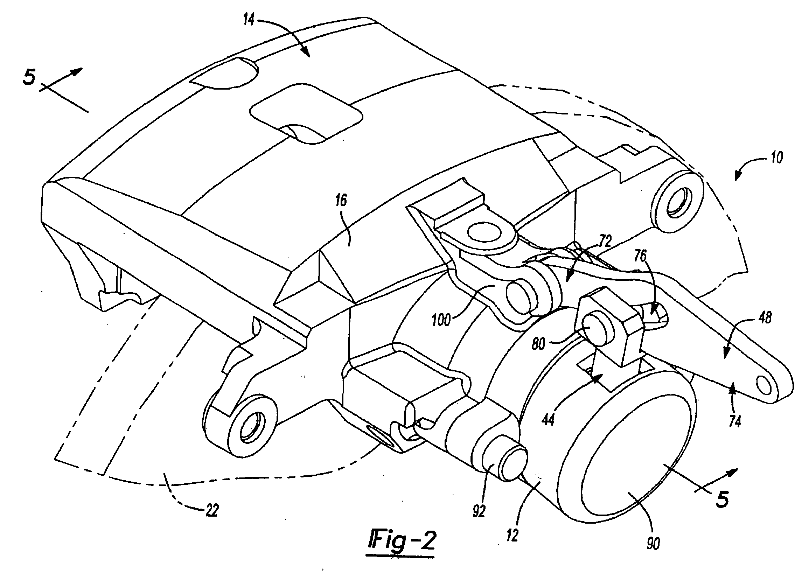

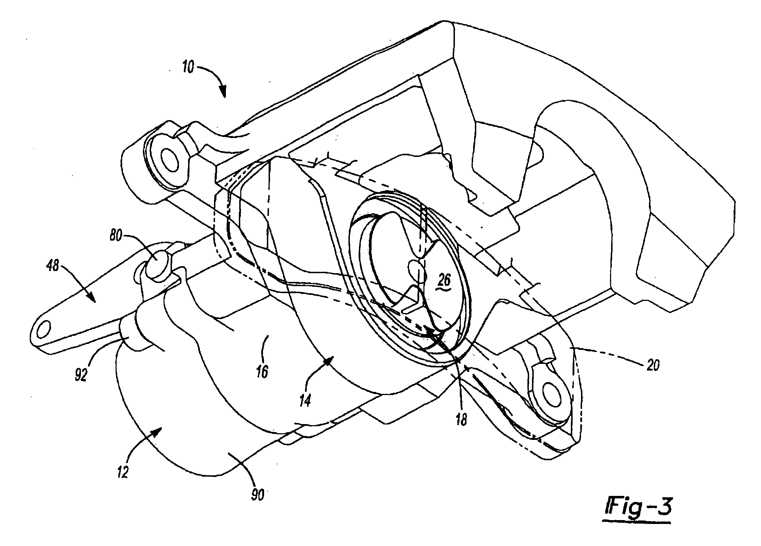

With reference to Figures 2-5, the present teachings generally include a brake assembly 10 having a parking apply mechanism 12 that may be coupled to a caliper body 14. The caliper body 14 may include a housing 16 in which one or more pistons 18 may be disposed. When the piston 18 extends from the caliper body 14, the piston 18 may clamp the brake pads 20 (a single brake pad shown in phantom in Figure 3) against a rotor 22 (shown in phantom in Figure 2) by, for example, an increase in the hydraulic fluid pressure within the brake mechanism 1 of the caliper body 14.

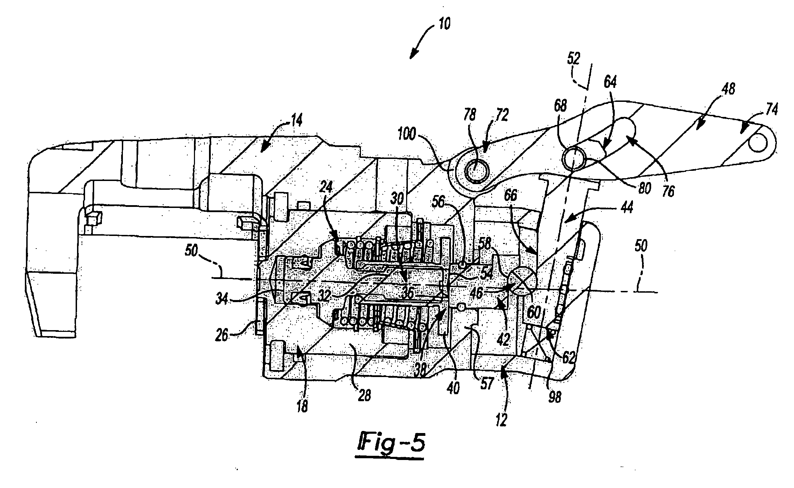

With reference to Figure 5, the caliper body 14 may define a fluid chamber 24. The piston 18 may include a face 26 and a skirt 28. A portion of the skirt 28 and an adjuster mechanism 30 may reside in the fluid chamber 24, while the face 26 of the piston 18 may be exterior thereto. The components of the adjuster mechanism 30 are outside the scope of the present disclosure but are disclosed in further detail in commonly assigned United States Patent Number 6,651,784, issued November 25, 2003 to Barbosa et al, which is hereby incorporated by reference in its entirety as if fully set forth herein.

Briefly, the adjuster mechanism 30 allows for wear of the brake pads 20 (Figure 3) and/or the rotor 22 (Figure 2) by elongating or telescoping. The parking apply mechanism 12 may therefore urge the adjuster mechanism 30 to extend the piston 18 and thus engages the brake pads 20 against the rotor 22. As such, components of the coupling mechanism 2 and/or the apply mechanism 3 need not be adjusted to compensate for wear of the brake pads 20 (Figure 3) and/or the rotor 22 (Figure 2) because the adjuster mechanism 30 elongates to compensate.

The adjuster mechanism 30 includes, among other things, a rod member 32 having a first end 34 and a second end 36. In addition, the adjuster mechanism 30 includes a sleeve nut 38 having a flange 40. The second end 36 of the rod member 32 is received by the sleeve nut 38. The coupling mechanism 2 of the parking apply mechanism 12 includes a first member 42 that engages the sleeve nut flange 40. The parking apply mechanism 12 also includes a second member 44 that engages the first member 42 via a rolling member 46.

A lever 48 may couple to the caliper body 14 and to the second member 44. The first member 42 travels generally along a piston axis 50 when urged by the second member 44 as the second member 44 travels along a second axis 52. The piston axis 50 may generally not be collinear with the second axis 52 along which the second member 44 travels.

In one example, the first member 42 or the post member 42 may include a first end 54 that may engage the flange 40 of the sleeve nut 38. The first end 54 of the post member 42 may include a suitable gasket 56. The post member 42 may also include a second end 58 that may include a pocket 60. The pocket 60 may hold the rolling member 46. The gasket 56 may seal the fluid chamber 24 around the post member 42 and may permit the first end 54 of the post member 42 to travel relative to the fluid chamber housing 57. It will be appreciated that the sleeve nut 38 and a relatively small portion of the first end 54 of the post member 42 may be within the fluid chamber 22, while the remaining portion of the post member 42 is outside of the fluid chamber 22. A portion of the post member 42 may be held by a portion of the fluid chamber housing 57 of the caliper body 14 and thus may restrict the travel of the post member 42 to generally travel along the piston axis 50.

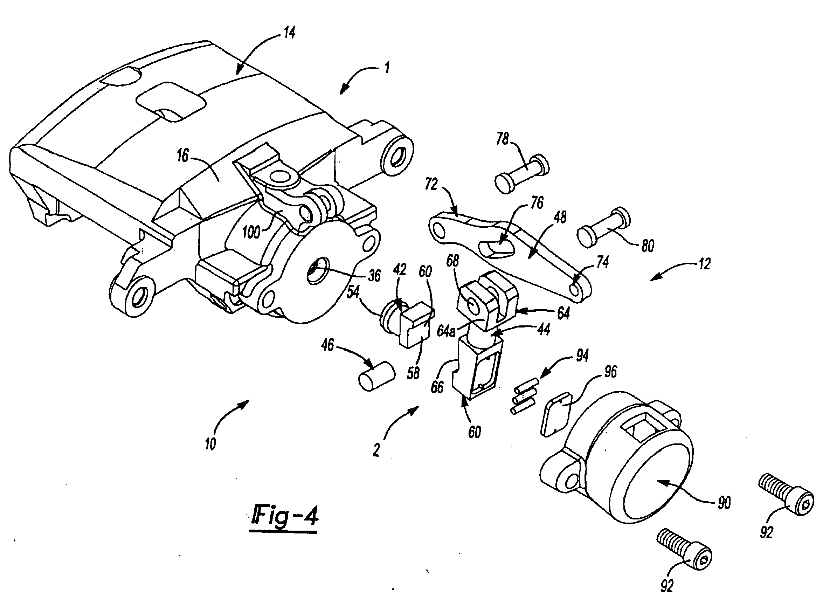

The second member 44 or the wedge member 44 may include a first end 62 and a second end 64. The first end 62 may include a roller surface 66. The second end 64 may define an aperture 68. The rolling member 46 may be contained between the pocket 60 formed on the second end 58 of the post member 42 and the roller surface 66. in this regard, the rolling member 46 rolls along the roller surface 66 while held in the pocket 60. As illustrated in Figure 4, the rolling member 46 may be configured in a generally cylindrical shape. In other examples, the rolling member may be one or more ball bearings, roller bearings, low friction sliding blocks, combinations thereof, etc.

With reference to Figures 3 and 4, the lever 48 may include a first end 72, a second end 74 and a channel 76 formed therethrough. The channel 76 may be disposed between the first and second ends 72, 74. A pin 78 may couple the first end 72 of the lever 48 to the housing 16 for pivoting movement relative thereto. The second end 74 may couple to, for example, a parking brake cable that is otherwise coupled to a parking brake lever/pedal in a passenger compartment of a vehicle (not specifically shown).

A pin 80 may be disposed in the channel 76 and may connect the lever 48 to the wedge member 44. Specifically, the pin 80 may be received by the apertures 68 formed in dual opposed flanges 64a that extend from the second end 64. In this configuration, movement of the lever 48 may cause movement of the wedge member 44, along the second axis 52 because the pin 80 may travel through the channel 76. When the wedge member 44 travels along the second axis 52, the wedge member 44 may urge the post member 42 along the piston axis 50 via the rolling member 46 and thus engage the brake mechanism 1.

The roller surface 66 formed on the wedge member 44 may have at least the two following regions. A first region may include a recess 82. A second region may include a ramp 84. The recess 82 may include a bottom 86 and walls 88. The rolling member 46 may initially reside in the recess 82 but then travel out of the recess 82 (i.e., up the walls 88) and then along the ramp 84, while held in the pocket 66. Based on a slope of the walls 88 relative to a slope of the ramp 84, the motion of the rolling member 46 in the first region may cause the post member 42 to move away from the wedge member 44 at a rate of travel. The rate of travel at which the post member 42 moves away from the wedge member 44, while the rolling member 46 is in the first region, may be greater than the rate of travel at which the post member 42 moves away from the wedge member 44, when the rolling member 46 is in the second region. More specifically, the rolling member 46 may quickly move up the walls 88 of the recess 82, which may, for example, quickly remove the clearance between the brake pads 20 and the rotor 22 (i.e., the initial increment of travel to move the brake pads 20 into contact with the rotor 22).

As the rolling member 46 quickly moves up the walls 88, the mechanical ratio of coupling mechanism changes. Because the rolling member 46 has to initially travel up the walls 88 (or jump up and out) of the recess 82 and then travel up the ramp 84, it may be shown that the ratio of distances traveled by the post member 42 relative to the wedge member 44 varies based on a position of the rolling member 46 relative to the roller surface 66 and the aforesaid regions. It may further be shown that as the rolling member 46 travels out of the recess 82 and up the ramp 84, the distance the post member 42 travels for a given amount of travel of the wedge member 44 changes in accordance with the predetermined mechanical ratio. For example, one increment of travel for the wedge member 44 with the rolling member in the first region will produce a first resulting increment of travel for the post member 42. The same increment of travel for the wedge member 44 but with the rolling member 46 in the second region will produce a second resulting increment of travel that may be less than the first resulting increment of travel.

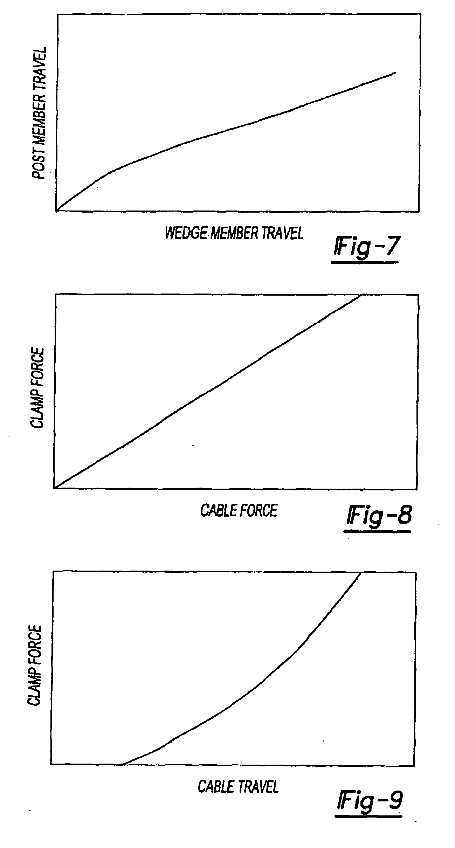

With reference to Figures 5 and 7, for example, the post member 42 initially moves at a larger rate of travel relative to the wedge member 44, which may be associated with the first region of the roller surface 66. Travel of the wedge member 44 in the second region, generally may cause the post member 42 to move at generally the same rate as the wedge member 44.

With reference to Figures 5 and 8, the force exerted by the brake mechanism 1 is about constant for a given force exerted on the brake cable (not shown). With reference to Figures 5 and 9, an initial increment of brake cable travel (e.g., pulling brake lever) produces generally no clamping force by the brake assembly 10. With additional cable travel, the clamping force increases a constant amount (i.e., constant slope) for a given increment of brake cable travel. With additional cable travel, the clamping force increases at an increasing amount (i.e., an increasing slope) for a given increment of brake cable travel.

In one example and with reference to Figure 4, the wedge member 44, the post member 42 and rolling member 46 may be contained within a housing 90. The housing 90 may attach to the caliper body 14 with suitable fasteners 92. Three roller bearings 94 may be disposed between the wedge member 44 and the housing 90. The three roller bearings 94 may abut a roller bearing plate 96 that is connected to the housing 90. This configuration may be shown to reduce friction between the wedge member 44 and the housing 90. In addition, the wedge member 44 may be held so that it may translate along the second axis 52. Moreover, a spring 98 may be held between the wedge member 44 and the housing 90. The spring 98 may be compressed as the lever 48, pushes the wedge member 44 and may exert a force to move the lever 48 back to its original position as the piston 18 retracts.

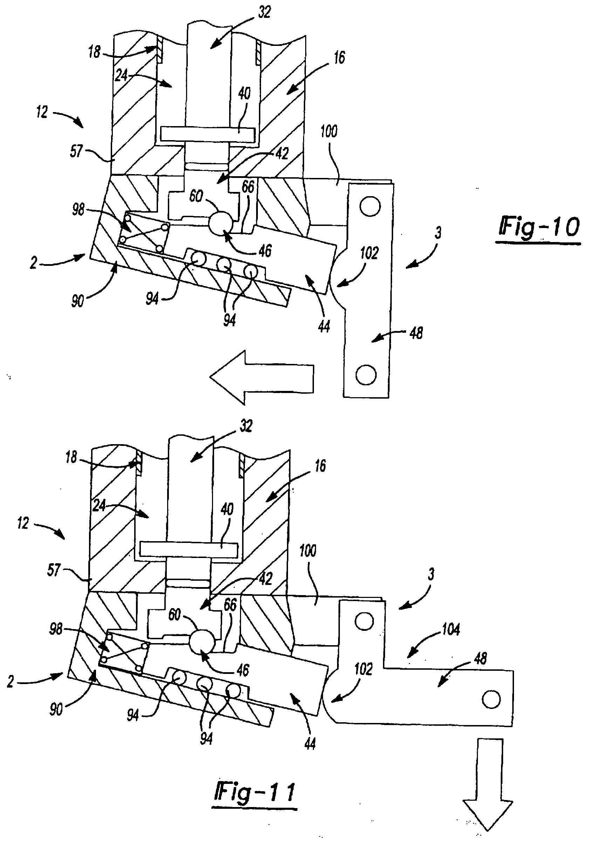

In one example and with reference to Figures 10, 11 and 12, the lever 48 may be hinged from a flange 100 that extends from the caliper body 14. The lever 48 may include a bump 102 or rounded protrusion that may contact an end of the wedge member 44. The lever 48 (Figure 11) may be formed in an L-shape. The bump or rounded protrusion may be formed at (or near) a corner 104 of the L-shape.

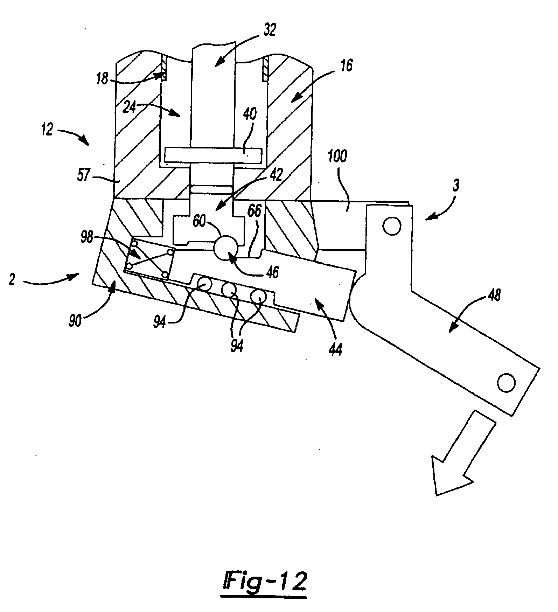

With reference to Figure 12, the lever 48 may be formed at an obtuse angle. The bump 102 or rounded protrusion may be formed at a corner 104 adjacent to the obtuse angle. With reference to Figures 5 and 10 - 12, the lever 48 may be pulled in a multitude of directions that are based on the orientation and/or configuration of the lever 48 and/or other suitable components of the apply mechanism 1. It will be appreciated therefore, that while the wedge member 44 may remain fixed to travel along the second axis 52, the lever 48, or other suitable members may be orientated (e.g., pivoted off of the housing 16) at various angles and orientations, thus allowing an actuating force to be imparted on the lever 48 at the plurality of orientations. It will be shown that the ability to position or direct the actuating force and/or the lever 48 at various orientations allow for varied routing of the parking brake lever/pedal and/or brake cable throughout the vehicle and further allows portions of the parking apply mechanism 12 to be mounted at the various locations and positions to minimize packaging space and improve the design of the suspension on the vehicle.

With reference to Figure 5, most of the parking apply mechanism 12 may reside outside of the brake fluid chamber 24 thereby reducing the propensity of trapping air within the fluid chamber 24. As such, the parking apply mechanism 12 may be made as a separate part that is fastened to the caliper body 14. It will be appreciated that various suitable separate assemblies, modular assemblies, monolithic assemblies and combinations thereof may be used.

While specific examples have been described in the specification and illustrated in the drawings, it will be understood by those skilled in the art that various changes may be made and equivalents may be substituted for elements thereof without departing from the scope of the present teachings as defined in the claims. Furthermore, the mixing and matching of features, elements and/or functions between various examples may be expressly contemplated herein so that one skilled in the art would appreciate from the present teachings that features, elements and/or functions of one example may be incorporated into another example as appropriate, unless described otherwise above. Moreover, many modifications may be made to adapt a particular situation or material to the present teachings without departing from the essential scope thereof. Therefore, it may be intended that the present teachings not be limited to the particular examples illustrated by the drawings and described in the specification as the best mode presently contemplated for carrying out this invention, but that the scope of the present disclosure will include any embodiments falling within the foregoing description and the appended claims.

## Claims

1. A parking brake assembly including a brake mechanism, a coupling mechanism and an apply mechanism, the brake mechanism includes a piston that clamps brake pads against a rotor, the coupling mechanism couples the apply mechanism to the brake mechanism, the coupling mechanism comprising:
i) a first member having a first end and a second end, said first end configured to engage the piston, said second end including a pocket;
ii) a second member having a first end and a second end; said first end of said second member defining a roller surface, said roller surface having a ramp portion; and
iii) a rolling member held by said pocket and disposed between said pocket and said roller surface, wherein said rolling member travels along said roller surface when said first member moves a first distance increment along a first axis and said second member moves a second distance increment along a second axis, said first and second axes are not co linear and a ratio based on said first distance increment and said second distance increment varies based on a position of said rolling member along said roller surface.

2. The coupling mechanism of Claim 1 wherein at least one of said second member, said rolling member and a portion of said first member reside outside of a fluid chamber associated with the brake mechanism.

3. The coupling mechanism of Claim 1 or Claim 2 wherein a value of said first distance increment increases at a greater rate than a value of said second distance increment, when said second member moves relative to said first member.

4. The coupling mechanism of any of the preceding claims wherein a value of said first distance increment increases at generally the same rate as a value of said second distance increment, when said second member moves relative to said first member.

5. The coupling mechanism of any of the preceding claims wherein a value of a clamping force exerted by the brake mechanism on the brake pads against the rotor is increasing at generally about the same rates as a value of an application force applied to said second member by the apply mechanism.

6. The coupling mechanism of Claims 1 to 5 wherein a value of a clamping force exerted by the brake mechanism on the brake pads against the rotor is increasing at generally the same rate as a value of said second distance increment, when said second member moves relative to said first member.

7. The coupling mechanism of Claims 1 to 5 wherein a value of a clamping force exerted by the brake mechanism on the brake pads against the rotor is increasing at a greater rate than a value of said second distance increment, when said member moves relative to said first member.

8. The coupling mechanism of any of the preceding claims wherein the apply mechanism is capable of applying a force to said second end of the said second member in a plurality of orientations relative to the coupling mechanism.

9. A parking brake assembly including a brake mechanism and a coupling mechanism, the brake mechanism exerts a clamping force to urge friction material against a rotating member, the coupling mechanism comprising at least an input member connected to an output member, said input member generally travels along a first axis, said output member generally travels along a second axis, said output member having a first end that engages the brake mechanism to urge the friction material against the rotating member, wherein said first and second axis are not co linear and wherein a ratio based on an increment of travel of said input member and an increment of travel of said output member varies with said travel of said input and said output members.

10. A caliper body that clamps brake pads against a rotor, the caliper body comprising:
i) a piston at least partially disposed in a fluid chamber;
ii) a parking apply mechanism coupled to the caliper body that extends said piston, said parking apply mechanism having a first member, a second member and a rolling member;
iii) said first member having a first end and a second end, said first end adapted to engage the piston;
iv) said second member having a first end and a second end, said first end defining a roller surface
v) said rolling member being located between said second end of said first member and said roller surface; and
vi) a ramp formed on said roller surface, said rolling member travel on said ramp causing said first member to move a first distance relative to said second member that moves a second distance, wherein a ratio based on said first distance and said second distance varies based on a position along said roller surface and wherein said parking brake assembly in generally outside the fluid chamber.
